Europäisches Patentamt

(19) European Patent Office

Office européen des brevets

(11) Veröffentlichungsnummer: **0 141 289**
A2

(12) **EUROPÄISCHE PATENTANMELDUNG**

(21) Anmeldenummer: 84111949.8

(22) Anmeldetag: 05.10.84

(51) Int. Cl.⁴: **H 04 M 1/27**

---

(30) Priorität: 22.10.83 DE 3338484

(43) Veröffentlichungstag der Anmeldung:
15.05.85 Patentblatt 85/20

(84) Benannte Vertragsstaaten:
AT BE DE FR GB IT NL

(71) Anmelder: International Standard Electric Corporation
320 Park Avenue
New York New York 10022(US)

(84) Benannte Vertragsstaaten:
BE FR GB IT NL AT

(71) Anmelder: Standard Elektrik Lorenz Aktiengesellschaft
Hellmuth-Hirth-Strasse 42
D-7000 Stuttgart 40(DE)

(84) Benannte Vertragsstaaten:
DE

(72) Erfinder: Hörmann, Thomas
Rosenstrasse 5
D-7151 Grossbottwar/WZH(DE)

(72) Erfinder: Immendörfer, Manfred, Dr.
Grabenstrasse 5
D-7257 Ditzingen 3(DE)

(72) Erfinder: Kopp, Dieter
Hirschstrasse 34
D-7251 Hemmingen(DE)

(74) Vertreter: Villinger, Bernhard, Dipl.-Ing. et al,
Standard Elektrik Lorenz AG Patent- und Lizenzwesen
Postfach 300 929 Kurze Strasse 8
D-7000 Stuttgart 30(DE)

---

(54) **Teilnehmersprechstelleneinrichtung.**

(57) Teilnehmersprechstelleneinrichtung, in der über ein Mikrophon eingegebene Sprachsignale direkt zur Telefonwahl benutzt werden.

Die Teilnehmersprechstelleneinrichtung besteht aus drei Hauptbestandteilen: einer Spracherkennungseinrichtung (SPE) mit einem ersten Interface (I1), einer Datenträgereinheit (DTE) mit einem zweiten Interface (I2) und einer Auswahlsteuerung (AS). Die drei genannten Einheiten sind über ein bidirektionales Bussystem (BUS) untereinander verschaltet und an eine Wahl- und Sprachsignalumsetzereinrichtung (WSU) angeschlossen.

EP 0 141 289 A2

./...

Fig.1

1

T.Hörmann - M.Immendörfer - D.Kopp 1-3-3

Teilnehmersprechstelleneinrichtung

Die Erfindung betrifft eine Teilnehmersprechstelleneinrichtung, die eine Spracherkennungseinrichtung enthält, in der die über ein Mikrofon empfangenen Sprachsignale ausgewertet werden, so daß der zu rufende Fernsprechteilnehmer direkt durch akustische Eingabe von Wörtern und/ oder Ziffern angewählt werden kann.

Es ist bereits eine Teilnehmersprechstelleneinrichtung bekannt (a voice-controlled, repertory-dialer system, L.R.Rabiner, J.G.Wilpon, A.E.Rosenberg, Bell System Technical Journal, Vol. 59, No. 7, September 1980), in der durch akustische Eingabe bestimmten Wörteroder Ziffernfolgen, der Benutzer automatisch mit einem gewünschten Fernsprechteilnehmer verbunden wird. Es muß dabei jedem Benutzer die Möglichkeit gegeben werden, beliebige Teilnehmernamen individuell zu verwenden. Zur Generierung der akustischen Referenzmusterdaten für die vom Benutzer gesprochenen Wörter und Ziffern wird hierbei nach dem Verfahren der sprecherabhängigen Erkennung vorgegangen. Hierzu muß der Benutzer seine gewünschten Teilnehmernamen und die zehn Ziffern in einer akustischen Trainingsphase der Spracherkennungseinrichtung eingeben. Diese speichert dann die daraus generierten Referenzmusterdaten im Speicher der

ZT/P1-Kn/Bl
20.10.1983

2

T.Hörmann 1-3-3

Spracherkennungseinrichtung ab und sie stehen damit dem Benutzer zur sprachgesteuerten Telefonwahl zur Verfügung. Da zur Zeit verfügbare Spracherkennungseinrichtungen nur einen Wortschatz von etwa 100 Worten besitzen, ergibt sich der Nachteil, daß der zu rufende Fernsprechteilnehmerkreis durch die beschränkte Erkennungskapazität einer solchen sprachgesteuerten Teilnehmersprechstelleneinrichtung sehr stark begrenzt wird. Außerdem ist jeder Benutzer auf das spezifische Telefon festgelegt, mit dem er seine akustische Referenzmusterdaten generiert hat. Somit ergibt sich bei einem größeren Benutzerkreis (Büro) eine weitere Einschränkung, da der Wortschatz der Spracherkennungseinrichtung auf die einzelnen Benutzer aufgeteilt wird.

Die technische Aufgabe der Teilnehmersprechstelleneinrichtung nach der Erfindung besteht darin, durch akustische Eingabe von Wörtern und/oder Ziffern, die in einer Spracherkennungseinrichtung einer Teilnehmersprechstelleneinrichtung erkannt werden, einen zu rufenden Fernsprechteilnehmer direkt anzuwählen.

Eine erfindungsgemäße Teilnehmersprechstelleneinrichtung der eingangs genannten Art ist dadurch gekennzeichnet, daß die Teilnehmersprechstelleneinrichtung eine Auswahlsteuerung aufweist, die aus einer Prüf- und Umschaltlogik, einem Auswahlsteuercomputer, einem Telefonregisterspeicher, einer Anzeigeeinheit, einer Eingabetastatur und einem bidirektionalen Bussystem besteht, daß das Bussystem die genannten Bestandteile der Auswahlsteuerung untereinander verbindet und über ein erstes Interface mit der Spracherkennungseinrichtung, über ein zweites Interface mit einer Datenträgereinheit und über eine Wahl- und Sprachsignalumsetzereinrichtung mit einer Teilnehmerleitung verbunden ist, daß der Telefonregisterspeicher

T.Hörmann 1-3-3

und/oder die          Datenträgereinheit für die
Aufnahme eines Teilnehmervokabulars und die zugehörigen
akustischen Referenzmusterdaten vorgesehen sind, und daß
das Mikrofon, die Spracherkennungseinrichtung und die
Wahl- und Sprachsignalumsetzereinrichtung über Signalleitungen an die Prüf- und Umschaltlogik angeschlossen sind.

Ein Vorteil der Teilnehmersprechstelleneinrichtung nach der Erfindung
liegt darin, daß durch den bidirektionalen Datenaustausch zwischen der
Spracherkennungseinrichtung und dem Telefonregisterspeicher
und/oder der          Datenträgereinheit, sowie
dem bidirektionalen Datenaustausch zwischen dem Telefonregisterspeicher und der          Datenträgereinheit,die Erzeugung und Abspeicherung akustischer Referenzmusterdaten zur Spracherkennung, sowie die Abspeicherung
des Teilnehmervokabulars für beliebige Teilnehmernamen
und für eine große Anzahl von Benutzern realisiert wird.

Vorteilhafte Weiterbildungen sind in den Unteransprüchen
gekennzeichnet.

Ein Ausführungsbeispiel wird im folgenden anhand der
Zeichnung erläutert. Es zeigen:

Figur 1    ein Blockschaltbild einer.sprachgesteuerten
           Teilnehmersprechstelleneinrichtung nach der
           Erfindung;
Figur 2    ein Blockschaltbild der Prüf- und Umschalt-
           logik nach Figur 1;
Figur 3 .  ein Prinzipschaltbild einer üblichen Sprach-
           erkennungseinrichtung;
Figur 4    ein Schaltbild für eine erste Ausführung einer
           Datenträgereinheit nach Figur 1, und

Figur 5    ein Schaltbild für eine zweite Ausführung einer
           Datenträgereinheit nach Figur 1.


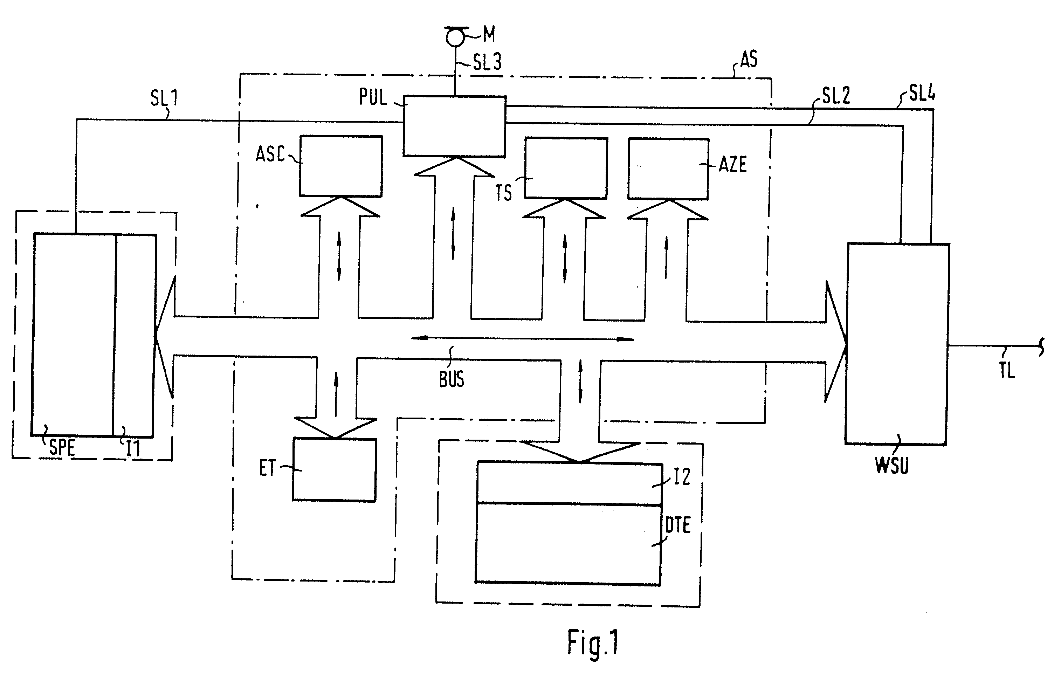

Die erfindungsgemäße Teilnehmersprechstelleneinrichtung
weist drei Hauptbestandteile auf, die über ein bidirektionales Bussystem BUS untereinander gekoppelt sind. Es
sind dies die in Figur 1 jeweils durch eine gestrichelte
Umrandung zusammengefaßten Teile: eine Auswahlsteuerung AS,
eine Spracherkennungseinrichtung SPE mit einem ersten Interface I1, und eine Datenträgereinheit DTE mit einem
zweiten Interface I2.


Weiterhin ist eine übliche Wahl- und Sprachsignalumsetzereinrichtung WSU, an die eine Teilnehmerleitung TL geführt
ist, an das Bussystem angeschaltet.


Die Auswahlsteuerung AS besteht aus einem Auswahlsteuercomputer ASC (ein üblicher Mikrorechner mit zugehörigem
Programm- und Variablenspeicher), einer Prüf- und Umschaltlogik PUL, einem Telefonregisterspeicher TS, einer Anzeigeeinheit AZE, einer Eingabetastatur ET und einem bidirektionalen Bussystem BUS, das die einzelnen Bestandteile der
Auswahlsteuerung AS untereinander verbindet. Außerdem ist
die Prüf- und Umschaltlogik PUL durch eine erste Signalleitung SL1 mit der Spracherkennungseinrichtung SPE, durch
zwei weitere Signalleitungen SL2, SL4 mit der Wahl- und
Sprachsignalumsetzereinrichtung WSU und über eine weitere
Signalleitung SL3 an ein Mikrofon M angeschlossen.


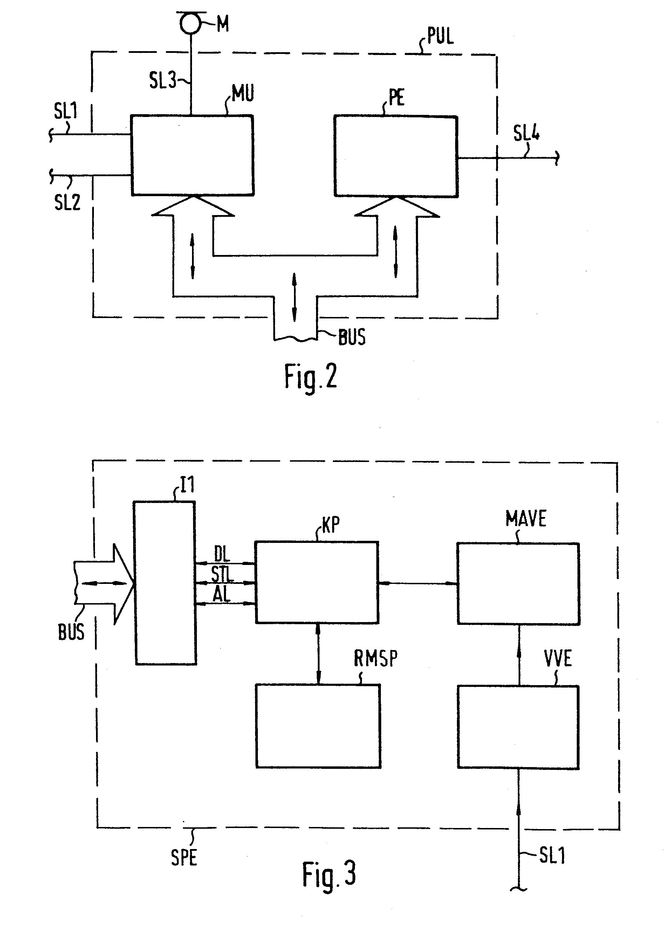

Wie der Figur 2 zu entnehmen ist, enthält die Prüf- und
Umschaltlogik PUL eine Prüfeinheit PE und einen Mikrofonumschalter MU. Die Prüfeinheit PE prüft zunächst über die
Signalleitung SL4, ob der Fall einer abgehenden oder einer

ankommenden Belegung der Teilnehmersprechstelleneinrichtung vorliegt. Im Falle der ankommenden Belegung wird der Mikrofonumschalter MU in die Stellung Mikrofon M - Signalleitung SL2 und damit über die Wahl- und Sprachsignalumsetzereinrichtung WSU auf die Teilnehmerleitung TL geschaltet. Bei einer abgehenden Belegung verbindet der Mikrofonumschalter MU zunächst das Mikrofon M mit der Spracherkennungseinrichtung SPE über die Signalleitung SL1. Nach erfolgter akustischer Eingabe und Erkennung der Teilnehmernummer, sowie Prüfung der Amtssignale auf der Teilnehmerleitung TL (Belegtzeichen, Freizeichen) wird das Mikrofon M über den Mikrofonumschalter MU wieder,wie oben beschrieben,auf die Teilnehmerleitung TL geschaltet.

Der prinzipielle Aufbau der Spracherkennungseinrichtung SPE,wie in Figur 3 dargestellt, wird im folgenden beschrieben.

Die Spracherkennungseinrichtung SPE arbeitet auf sprecherabhängiger Basis und hat einen Wortschatz von beispielsweise 128 Wörtern. Sie setzt sich aus den folgenden,untereinander verbundenen Einheiten zusammen. Eine Vorverarbeitungseinheit VVE, eine Merkmalsanalyse- und Vergleichseinheit MAVE, einem Kontrollprozessor KP und einem Referenzmusterdatenspeicher RMSP. Der Kontrollprozessor KP ist über Daten-, Adressen- und Steuerleitungen DL,AL, STL an das erste Interface I1 angeschlossen, steuert den gesamten Ablauf der Spracherkennungseinrichtung SPE und führt die Befehle der Auswahlsteuerung AS, wie z.B. Trainieren, Erkennen, Abspeichern von Referenzmusterdaten durch. Zur Initialisierung der sprachgesteuerten Teilnehmersprechstelleneinrichtung werden zunächst die von

6

T.Hörmann 1-3-3

einem Benutzer gewünschten Teilnehmernamen, Firmenbezeichnungen, usw. und die zugehörigen Telefonnummern (Teilnehmervokabular) über die Eingabetastatur ET und das Bussystem BUS in den Telefonregisterspeicher TS geladen. Nach
erfolgter manueller Eingabe wird der betreffende Benutzer
durch die Anzeigeeinheit AZE aufgefordert,nun in einer
akustischen Trainingsphase die zuvor eingegebenen Begriffe
vorzusprechen. Das über die Signalleitung SL1 ankommende
Sprachsignal wird in der Vorverarbeitungseinheit VVE tiefpaßgefiltert, verstärkt und analog-digital gewandelt.
Dann erfolgt in der Merkmalsanalyse- und Vergleichseinheit
MAVE eine Merkmalsextraktion von Parametern zur Spracherkennung, wobei diese Referenzmusterdaten intern in den
Referenzmusterdatenspeicher RMSP abgelegt werden. Der Auswahlsteuercomputer ASC kann nun die benutzerspezifischen
akustischen Referenzmusterdaten von der Spracherkennungseinrichtung SPE über das erste Interface I1 und das bidirektionale Bussystem BUS in den Telefonregisterspeicher
TS und bei Bedarf den gesamten Inhalt des Telefonregisterspeichers TS über das zweite Interface I2 in die Datenträgereinheit DTE
transferieren, die intern in der Auswahlsteuerung AS angeordnet sein kann,
oder, wie in Figur 1, 4 und 5 dargestellt, eine externe Einrichtung sein
kann. Der Telefonregisterspeicher TS bildet zusammen mit der Datenträgereinheit DTE eine praktisch beliebig große Speicherkapazität, so daß eine
große Anzahl von Benutzern ihre jeweils spezifischen Daten (Teilnehmernamen,-nummern und zugehörige akustische Referenzmusterdaten) generieren
und abspeichern kann. Zur Identifizierung eines bestimmten
Benutzers wird eine Basisliste von Benutzernamen zuvor
in der Spracherkennungseinrichtung SPE generiert und abgespeichert. Außerdem ist es möglich, durch manuelle Eingabe einer vorbestimmten Nummer über die Eingabetastatur
ET eine Identifikation durchzuführen. Nach erfolgter
Identifikation werden die akustischen Referenzmusterdaten

und das Teilnehmervokabular aus der
Datenträgereinheit DTE über das zweite Interface I2 und
das Bussystem BUS in das Telefonregisterspeicher TS und
von dort die akustischen Referenzmusterdaten über das
Bussystem BUS, und das erste Interface I1 in die Spracherkennungseinrichtung SPE geladen. Um eine kurze Reaktionszeit des Systems zu gewährleisten, werden schnelle parallele Interfacebausteine (I1, I2) benutzt. Die Referenzmusterdaten eines Benutzers bleiben solange im Referenzmusterdatenspeicher
RMSP der Spracherkennungseinrichtung SPE gespeichert, bis ein neuer
Benutzer identifiziert wird.

Im Betrieb spricht der Benutzer den von ihm gewünschten
Teilnehmernamen, bzw. -nummer in das Mikrofon M. In der
Spracherkennungseinrichtung SPE wird durch die Merkmalsanalyse- und Vergleichseinheit MAVE in Vergleichschritten
die größte Ahnlichkeit zwischen einem gesprochenen Wort
und den gespeicherten Referenzmusterdaten festgestellt.
Das Ergebnis dieses Erkennungsprozesses wird an den Auswahlsteuercomputer ASC weitergegeben. Bei einer ungenügenden Erkennung wird der Benutzer über die Anzeigeeinheit AZE zur Wiederholung der Eingabe aufgefordert. Ansonsten  adressiert der Auswahlsteuercomputer ASC den zugehörigen Teilnehmernamen in dem Telefonregisterspeicher
TS und ordnet ihm die  zugehörige Rufnummer zu. Bei akustischer Eingabe einer Telefonummer werden die erkannten
Ziffern direkt in den Telefonregisterspeicher TS gelesen.
Anschließend wird diese Rufnummer aus dem Speicher TS in
die Wahl- und Sprachsignalumsetzereinrichtung WSU gelesen
und in Steuersignale (nach dem Impulswahlverfahren oder
dem Mehrfrequenzcodeverfahren) umgesetzt. Auf der Anzeigeeinheit AZE erscheint für Kontrollzwecke  der erkannte Teilnehmernamen und die betreffende Rufnummer.

8

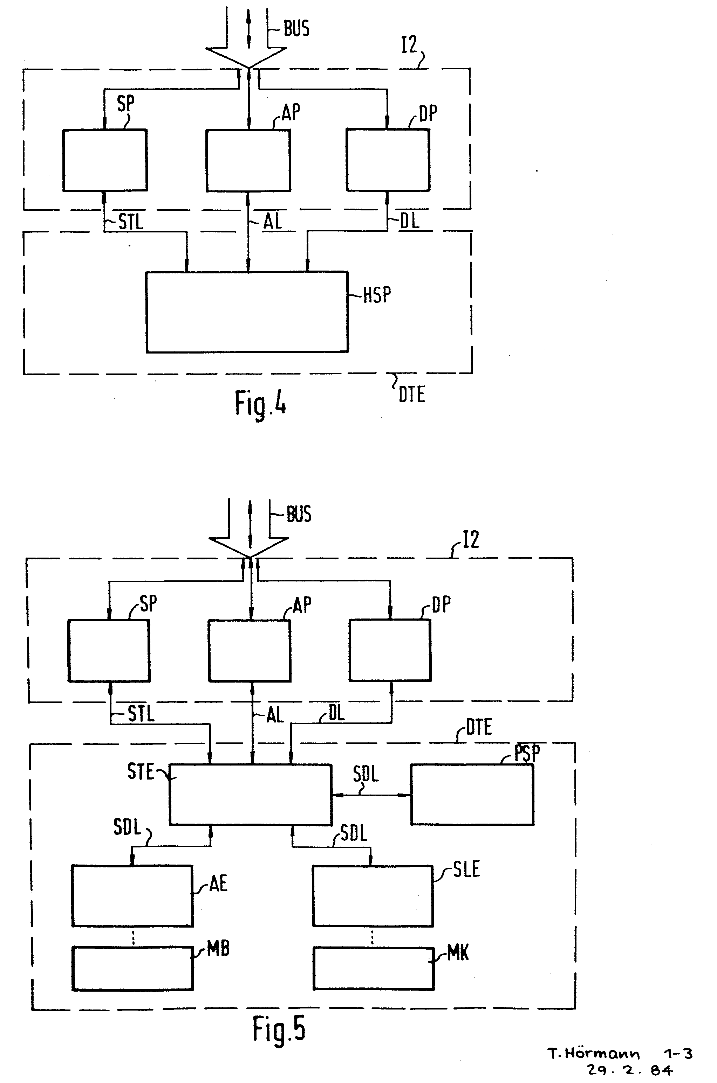

Eine erste Ausführung der oben genannten Datenträgereinheit DTE, wie in Figur 4 abgebildet, besteht aus einem Halbleiterspeicher HSP, der über Steuer-, Adressen- und Datenleitungen STL, AL, DL mit entsprechenden Steuer-, Adressen- und Datenpufferspeichern SP, AP, DP im zweiten Interface I2 verbunden ist. Die über das bidirektionale Bussystem BUS transportierten Daten gelangen in die Datenpufferspeicher SP, AP, DP des zweiten Interface I2 und werden dann in dem Halbleiterspeicher HSP abgelegt. Verwendet man nun in vorteilhafter Weise protable und somit externe Halbleiterspeicher HSP (z.B. batteriegepufferte CMOS-Speicher oder EE-PROM), so ist der jeweilige Benutzer nicht mehr von der spezifischen Teilnehmersprechstelleneinrichtung mit der er seine Referenzmusterdaten und sein Teilnehmervokabular generiert hat abhängig, da er seine individuellen Daten in allen Teilnehmersprechstelleneinrichtungen verwenden kann, die mit der erfindungsgemäßen sprachgesteuerten Einrichtung ausgerüstet sind.

Eine zweite Ausführung der genannten Datenträgereinheit DTE ist in Figur 5 dargestellt. Sie weist eine Steuereinheit STE auf, die über Steuer- und Datenleitungen SDL mit einem Plattenspeicher PSP, mit einer Antriebseinheit AE für Magnetbänder MB und mit einer Schreib-Leseeinheit SLE für Magnetkarten MK angeschlossen ist. Die Steuereinheit STE ist durch Steuer-, Adressen- und Datenleitungen STL, AL, DL mit dem zweiten Interface I2 (Steuer-Adressen- und Datenpufferspeicher SP, AP, DP) verschaltet, welches als Zwischenspeicher für die über das bidirektionale Bussystem BUS transferierten Daten dient. Mit Hilfe der Steuereinheit STE erfolgt die wahlweise Abspeicherung auf den Plattenspeicher PSP, auf Magnetbänder MB oder auf

9

T.Hörmann 1-3-3

Magnetkarten MK. Bei Verwendung von Magnetkarten MK oder
-bändern MB erhält man wieder eine portable und somit externe Datenträgereinheit DTE, so daß der Benutzer ebenfalls die Möglichkeit besitzt seine individuell generierten Daten permanent zu speichern und in einer beliebigen
erfindungsgemäßen sprachgesteuerten Teilnehmersprechstelleneinrichtung zu verwenden.

Weitere Leistungsmerkmale der erfindungsgemäßen Einrichtung sind:

Verwendung als Fern-, Orts- oder Nebenstelleneinrichtung.
Für das Ausland können die unterschiedlichen Netzbedingungen in der Prüf- und Umschaltlogik PUL berücksichtigt werden.

Es besteht die Möglichkeit, daß mehrere Benutzer ihre
akustischen Referenzmuster in dem Referenzmusterdatenspeicher RMSP der Spracherkennungseinrichtung SPE und
ihr Teilnehmervokabular im Telefonregisterspeicher TS abspeichern, so daß die erfindungsgemäße Teilnehmersprechstelleneinrichtung gleichzeitig für verschiedene Benutzer
ohne jeweilige Identifizierung betrieben werden kann.
Die Grenze dieses Betriebsfalles liegt bei der maximalen
Speicherkapazität des Referenzmusterdatenspeichers RMSP.

Weiterhin besteht die Möglichkeit der Fehlerkorrektur
durch Sprache. Nach jedem akustisch eingegebenen Namen
oder jeder Ziffer wird das in der Spracherkennungseinrichtung SPE erkannte Wort auf der Anzeigeeinheit AZE
wiedergegeben. Bei einer fehlerhaften Erkennung hat der
Benutzer die Möglichkeit durch akustische Eingabe des

10

T.Hörmann 1-3-3

Wortes "Falsch" das momentan erkannte Wort oder die Ziffer zu löschen und anschließend nochmals akustisch einzugeben. Wird bei Zifferneingabe ein Fehler von dem Benutzer erst später bemerkt (z.B. Anzeige von 6 Ziffern, 4te Ziffer falsch eingegeben oder erkannt), so werden durch mehrmalige akustische Eingabe des Wortes "Falsch" (im Beispiel dreimale Eingabe) die dem Fehler folgenden Ziffern und die fehlerhafte Ziffer selbst gelöscht und anschliessend erfolgt ab der korrigierten Stelle die Eingabe der restlichen Ziffern. Die Auslösung des Wahlvorgangs erfolgt durch die akustische Eingabe des Wortes "Wählen". Dieser Wahl-Befehl hat bei Zifferneingabe immer zu erfolgen, da Telefonnummern unterschiedlicher Länge zu verarbeiten sind und somit das Ende einer Nummer nicht im Voraus bekannt ist.

Bei der akustischen Namenseingabe besteht in einer Sonderbetriebsart die Möglichkeit auf den Wähl-Befehl zu verzichten und somit direkt die Wahl durchzuführen. Dadurch entfällt aber die Korrekturmöglichkeit der eingegebenen Information, so daß das Risiko einer Falschwahl aufgrund einer falschen Eingabe oder einer falschen Erkennung besteht.

0141289

T.Hörmann - M.Immendörfer - D.Kopp 1-3-3


Patentansprüche


1.    Teilnehmersprechstelleneinrichtung, die eine Spracherkennungseinrichtung enthält, in der die über ein Mikrofon    empfangenen Sprachsignale ausgewertet werden, so
daß der zu rufende Fernsprechteilnehmer direkt durch akustische Eingabe von Wörtern und/oder Ziffern angewählt werden kann,    d a d u r c h    g e k e n n z e i c h n e t,
daß die Teilnehmersprechstelleneinrichtung eine Auswahlsteuerung (AS) aufweist, die aus einer Prüf- und Umschaltlogik (PUL), einem Auswahlsteuercomputer (ASC), einem Telefonregisterspeicher (TS), einer Anzeigeeinheit (AZE), einer Eingabetastatur (ET) und einem bidirektionalen Bussystem (BUS) besteht, daß das Bussystem (BUS) die genannten Bestandteile
der Auswahlsteuerung (AS) untereinander verbindet und über
ein erstes Interface (I1) mit der Spracherkennungseinrichtung (SPE), über ein zweites Interface (I2) mit einer
             Datenträgereinheit (DTE) und über eine Wahl-
und Sprachsignalumsetzereinrichtung (WSU) mit einer Teilnehmerleitung (TL) verbunden ist, daß der Telefonregisterspeicher (TS)
und/oder die          Datenträgereinheit (DTE) für
die Aufnahme eines Teilnehmervokabulars und die zugehörigen akustischen Referenzmusterdaten vorgesehen sind, und
daß das Mikrofon (M), die Spracherkennungseinrichtung (SPE)
und die Wahl- und Sprachsignalumsetzereinrichtung (WSU)
über Signalleitungen (SL1, SL2, SL3, SL4) an die Prüf-
und Umschaltlogik (PUL) angeschlossen sind.


ZT/P1-Kn/Bl
20.10.1983

T.Hörmann 1-3-3


2.    Teilnehmersprechstelleneinrichtung nach Anspruch 1,
dadurch gekennzeichnet, daß der Auswahlsteuercomputer (ASC)
über eine erste Verbindung - Spracherkennungseinrichtung
(SPE), erstes Interface (I1), Bussystem (BUS), Telefonregisterspeicher (TS) - oder über  eine zweite Verbindung - Spracherkennungseinrichtung (SPE), erstes Interface (I1), Bussystem
(BUS), zweites Interface (I2), Datenträgereinheit (DTE) - einen schnellen bidirektionalen
Transport der generierten akustischen Referenzmusterdatensteuert.


3.    Teilnehmersprechstelleneinrichtung nach Anspruch 1,
dadurch gekennzeichnet, daß der Auswahlsteuercomputer (ASC)
über eine dritte Verbindung - Telefonregisterspeicher (TS), Bussystem (BUS), zweites Interface (I2),
Datenträgereinheit (DTE) - einen bidirektionalen
Transport des Teilnehmervokabulars und der zugehörigen
akustischen Referenzmusterdaten steuert.


4.    Teilnehmersprechstelleneinrichtung nach einem der
Ansprüche 1 bis 3, dadurch gekennzeichnet, daß die in der
                  Datenträgereinheit (DTE) oder dem Telefonregisterspeicher (TS) gespeicherten benutzerspezifischen akustischen Referenzmusterdaten, nach akustischer oder manueller Eingabe eines zur Benutzeridentifikation individuellen
Schlüsselwortes/-zahl, durch den Auswahlsteuercomputer (ASC),
gesteuert, in die Spracherkennungseinrichtung (SPE) transportiert werden und daß das in der Datenträgereinheit (DTE) gespeicherte zugehörige Teilnehmervokabular in den Telefonregisterspeicher (TS) geladen wird.

5.      Teilnehmersprechstelleneinrichtung nach einem der Ansprüche 1 bis 4, dadurch gekennzeichnet, daß das zweite Interface (I2) einen Steuer-, Adressen- und Datenpuffer (SP, AP, DP) aufweist, welche mit einem Halbleiterspeicher (HSP) als          Datenträgereinheit (DTE) verbunden sind.

6.      Teilnehmersprechstelleneinrichtung nach einem der Ansprüche 1 bis 4, dadurch gekennzeichnet, daß die Datenträgereinheit (DTE) eine Steuerungseinheit (STE) enthält, wodurch die im zweiten Interface (I2) gepufferten Signale auf einen Plattenspeicher (PSP) oder über eine angeschlossene Antriebseinheit (AE) auf ein Magnetband (MB) oder über eine angeschlossene Schreib-Leseeinheit (SLE) auf eine Magnetkarte (MK) gespeichert werden.

7.      Teilnehmersprechstelleneinrichtung nach einem der vorhergehenden Ansprüche, dadurch gekennzeichnet, daß die Prüf- und Umschaltlogik (PUL) einen Mikrofonumschalter (MU) enthält, der die über das Mikrofon (M) ankommende Sprachsignale über Signalleitungen (SL1, SL2, SL4) entweder auf die Spracherkennungseinrichtung (SPE) oder auf die Wahl- und Sprachsignalumsetzereinrichtung (WSU) schaltet.

Fig.1

SL1  SL2  SL3  SL4  AS  M  PUL  ASC  TS  AZE  SPE  I1  BUS  ET  I2  DTE  WSU  TL

- ¹/₃ -

014289

T. Hörmann  1-3-:
29. 2. 84

Fig.2

Fig.3

T·Hörmann 1-3-3
29. 2. 84

Fig.4

Fig.5

T. Hörmann 1-3
29. 2. 84